# EUROPEAN PATENT SPECIFICATION

(11) **EP 1 985 528 B1**
(45) Date of publication and mention of the grant of the patent: **05.05.2010**
(21) Application number: 07707337.7
(22) Date of filing: 24.01.2007
(51) Int. Cl.: B62D 55/253, B62D 55/08, B62D 55/24

(54) **CORELESS RUBBER CRAWLER AND TRAVELING DEVICE**
KERNLOSE GUMMIRAUPE UND REISEVORRICHTUNG
CHENILLE EN CAOUTCHOUC SANS NOYAU ET DISPOSITIF DE DÉPLACEMENT

(30) Priority: 24.01.2006 JP 2006015157
(43) Date of publication of application: 29.10.2008
(73) Proprietor: Bridgestone Corporation, Tokyo 104-8340 (JP)
(72) Inventor: UCHIDA, Shinji, Tokyo, 104-8340 (JP)
(74) Representative: Whalley, Kevin
(86) International application number: PCT/JP2007/051090
(87) International publication number: WO 2007/086428

(56) References cited:
- JP-A- 06 032 262
- JP-A- 06 255 546
- JP-A- 10 007 038
- JP-A- 2003 011 860
- JP-U- 50 083 733

## Description

### Technical Field

The present invention relates to improvement of rubber protrusions provided for driving of a coreless rubber crawler.

### Background Art

A coreless rubber crawler is used for relatively high-speed traveling and adopts a system in which rubber protrusions that are formed at a constant pitch at the center of an inner circumferential surface of the rubber crawler and a sprocket that is provided at a machine body side engage with each other to transmit driving force to the rubber crawler.

As a result, for example, in uphill traveling on a steeply inclined surface or the likes there are times when an unexpectedly large force is applied to the rubber protrusions from the outside, and since the direction of the applied force is not constant, there are cases where, according to the circumstances, great deformation is caused at the rubber protrusions, engagement with the sprocket is not achieved, and a so-called tooth skipping phenomenon occurs. When this tooth skipping phenomenon occurs often, not only is vibration caused at the machine body, but there are cases where this leads to destruction of the rubber protrusions, and this can cause shortening of the lifespan of the rubber crawler.

Further, even at the time of ordinary traveling, driving force is constantly applied to the rubber protrusions from the sprocket Therefore, a phenomenon in which surface pressure with respect to the rubber protrusions becomes high compared to other portions of the rubber crawler is repeated. As a result, there are also cases where the rubber protrusions are damaged (generation of cracks, .loss of a part of rubber, or the like), whereby the lifetime of the rubber crawler may be shortened.

For the purpose of preventing vibration originating at a wheel, the present applicant has proposed a rubber crawler in which raised step portions are formed to the left and right directions of the rubber protrusions in Japanese Patent Application Laid-Open (JP-A) No. 11-98871 (Patent Document 1).
JP6-255546, JP2003-011860 and JP 10-007038 all disclose known endless rubber crawlers, which disclosure covers the preamble features of claim 1.

### Disclosure of the Invention

### Subject to be Addressed by the Invention

The present invention has been invented to solve the problems of the conventional art such as described above and provides a rubber crawler and traveling device in which tooth skipping does not occur even if a large load acts on a rubber protrusion, and in which surface pressure on the rubber protrusion is reduced.

### Means for Addressing the Subject

The main first aspect of the present invention is a coreless rubber crawler comprising an endless rubber elastic body, a tensile material buried in a longitudinal direction thereof, a rubber lug formed at an outer circumferential surface of the rubber elastic body, and rubber protrusions further formed at an inner circumferential surface of the rubber elastic body at a constant pitch in the longitudinal direction thereof, wherein raised step portions are formed to the right and left of the rubber protrusions in the width direction of the endless rubber elastic body, and a linear groove that is continuous to base portions of the rubber protrusions is formed between raised step portions that are adjacent to each other in the longitudinal direction of the rubber elastic body when the rubber crawler which is mounted at a machine body is seen in side view.

A second aspect of the present invention is a coreless rubber crawler traveling device comprising: a coreless rubber crawler according to the first aspect and a sprocket that engages with the rubber protrusions to transmit driving force, wherein a length of an engaging portion of the sprocket is defined to be a length that engages with the base portions of the rubber protrusions and the linear groove.

### Effects of the Invention

The raised step portions and the linear groove are formed at the rubber crawler, and the engaging portion of the sprocket is made to be a length that spans the entire length of the linear groove formed between the raised step portions and the rubber protrusion base portions. In other words, a structure is provided in which the engaging portion of the sprocket which transmits driving force with respect to the rubber crawler engages with not only the base portions of the rubber protrusions but also with the linear groove. Due to this, application of an unexpected load to the rubber protrusions is prevented, resulting in lowering of surface pressure to the rubber protrusions, and large deformation of the rubber protrusions is eliminated, whereby damage to the rubber protrusions can be reduced.

The present applicant has already provided a rubber crawler in which raised step portions are formed to the left and right directions of rubber protrusions (refer to Japanese Patent Application Laid-Open (JP-A) No. 11-198871).

The content of this previous proposal is a rubber crawler in which a core and steel cords serving as a tensile material are buried, wherein a pair of protrusions protruding from the core toward an inner circumferential side of the rubber crawler are formed. In the rubber crawler, raised step portions serving as a wheel traveling surface are provided at the left and right width directions of the protrusions, the raised step portions are disposed in a zigzag shape in the longitudinal direction of the rubber crawler, and a mud draining groove is formed between the raised step portions.

In the invention of the aforementioned previous proposal, the raised step portions form the zigzag shape in the longitudinal direction of the rubber crawler for the purpose of preventing vibration originating at a wheel. The mud draining groove is formed accompanying the raised step portions and is provided for mud draining, and since the mud draining groove is also formed in a zigzag shape, this is not a structure in which a sprocket pin engages therewith.

The rubber crawler of the present invention is a coreless rubber crawler having rubber protrusions for driving at an inner circumferential surface thereof, wherein raised step portions are provided to both of left and right sides corresponding to the rubber protrusions, and a space between step portions that are adjacent to each other in the longitudinal direction of the rubber crawler is made to be a linear-shaped groove that is continuous across the width direction of the crawler while matching with (corresponding to) base portions of the rubber protrusions.

Since the base portions of the rubber protrusions and the linear-shaped groove are configured to engage with a sprocket pin, when the rubber crawler which is mounted at a machine body is seen in side view, it is necessary for the base portions of the rubber protrusions and the linear-shaped groove to form one continuous linear shape. In the coreless rubber crawler traveling device of the second aspect of the present invention, the relationship between the coreless rubber crawler and the sprocket is such that, with respect to the base portions of the rubber protrusions and the linear groove which form a continuous linear shape, the sprocket comprises a pin formed at the same pitch as the rubber protrusions and it is preferable that a length of the pin is made to be a length that spans the entire length of the linear groove formed between the raised step portions, and the rubber protrusion base portions. When the rubber crawler is driven, the pin engages in a form so as to be buried in the groove and engages not only with the base portions of the rubber protrusions, but also simultaneously with the linear groove. Due to this, application of an unexpected load to the rubber protrusions is prevented, resulting in elimination of large deformation of the rubber protrusions, and damage to the rubber protrusions can be reduced.

### Brief Description of the Drawings

FIG 1 is a plan view of an inner circumferential side of a coreless rubber crawler according to a first aspect of the invention.
FIG 2 is a side view of FIG 1.
FIG 3 is a cross-sectional view along a line A-A in FIG 1.
FIG 4 is a perspective view of FIG 1.
FIG 5A is a perspective view of a sprocket 20 used in a second aspect of the present invention.
FIG 5B is a perspective view of another sprocket 20 used in a second aspect of the present invention.
FIG 6 is a cross-sectional view of a main portion, showing a second aspect of the present invention.
FIG. 7 is a perspective view showing a modified example of the coreless rubber crawler according to the first aspect of the invention.

### Examples

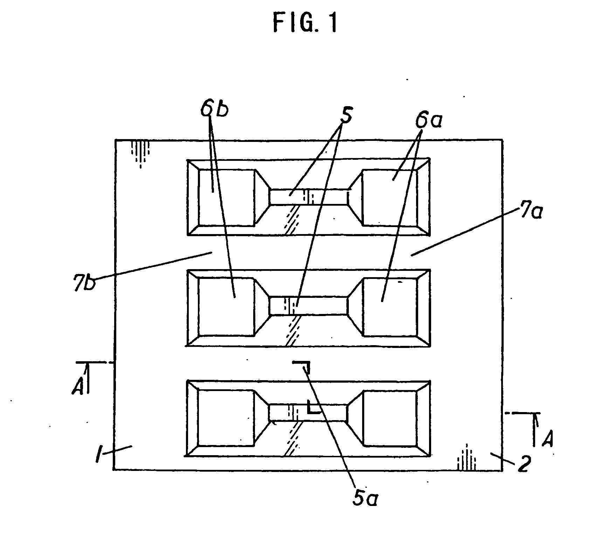

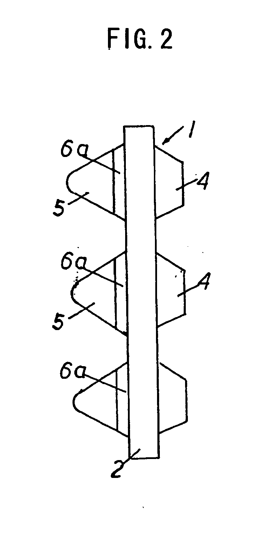

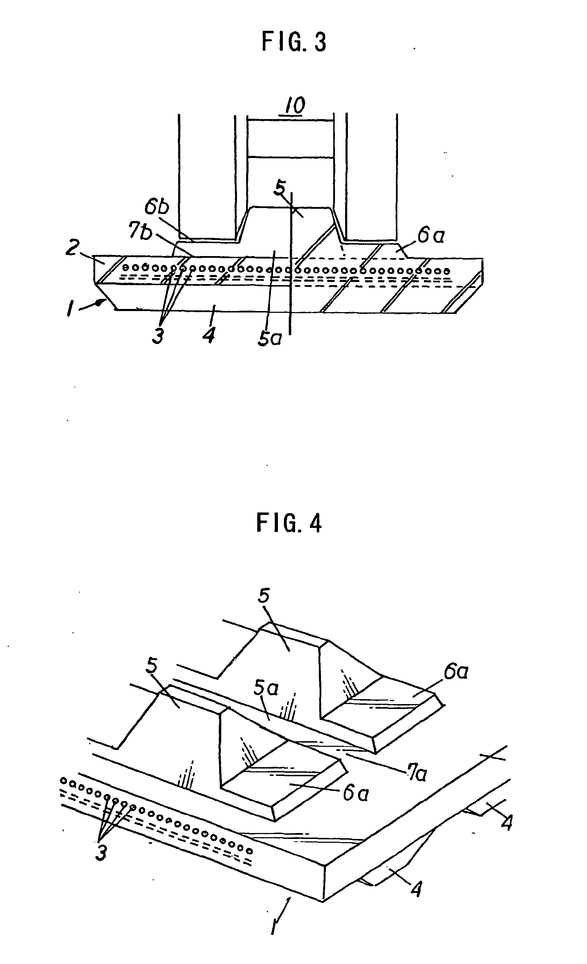

Hereinafter, an embodiment of the present invention will be described in further detail by way of the drawings. FIG. 1 is a plan view of an inner circumferential side of the coreless rubber crawler of the first aspect of the present invention, FIG. 2 is a side view, FIG 3 is a cross-sectional view along a line A-A in Fig. 1, and FIG. 4 is a perspective view. In the drawings, reference numeral 1 indicates a coreless rubber crawler, and the coreless rubber crawler is continuous in the up-down direction of the page in FIG. 1 with an endless rubber elastic body 2 serving as a substrate. Reference numeral 3 indicates steel cords serving as a tensile material buried in the rubber elastic body 2 in the longitudinal direction thereof. Further, lugs 4 are formed at an outer circumferential surface of the rubber elastic body 2, and rubber protrusions 5 are formed at the center of the inner circumferential surface at a constant pitch. At the left and right of the rubber protrusions 5 in the width direction of the rubber crawler, raised step portions 6a and 6b are formed. The rubber protrusions 5 engage with a sprocket, which will be described later, to transmit driving force, and the raised step portions 6a and 6b are a traveling surface of a wheel 10 provided at a machine body.

One feature of the present invention is that, in the coreless rubber crawler, linear-shaped grooves (transverse grooves) 7a and 7b are formed between raised step portions 6a and between raised step portions 6b that are adjacent to each other in the circumferential direction of the rubber crawler 1 so as to be continuous with (aligned with) the base portions 5a of the rubber protrusions 5. The grooves (transverse grooves) 7a and 7b extend in the width direction of the rubber crawler. In other words, it is a feature that, when the rubber crawler is seen from the side, the base portion 5a of the rubber protrusions 5 and the grooves 7a and 7b formed at the raised step portions 6a and 6b are overlapped, and the three of these portions 5a, 7a and 7b form a linear shape.

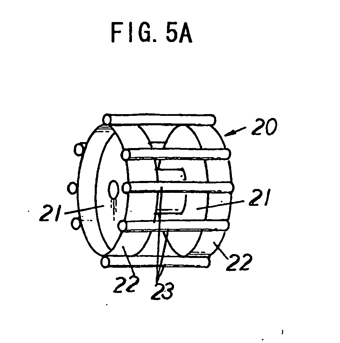

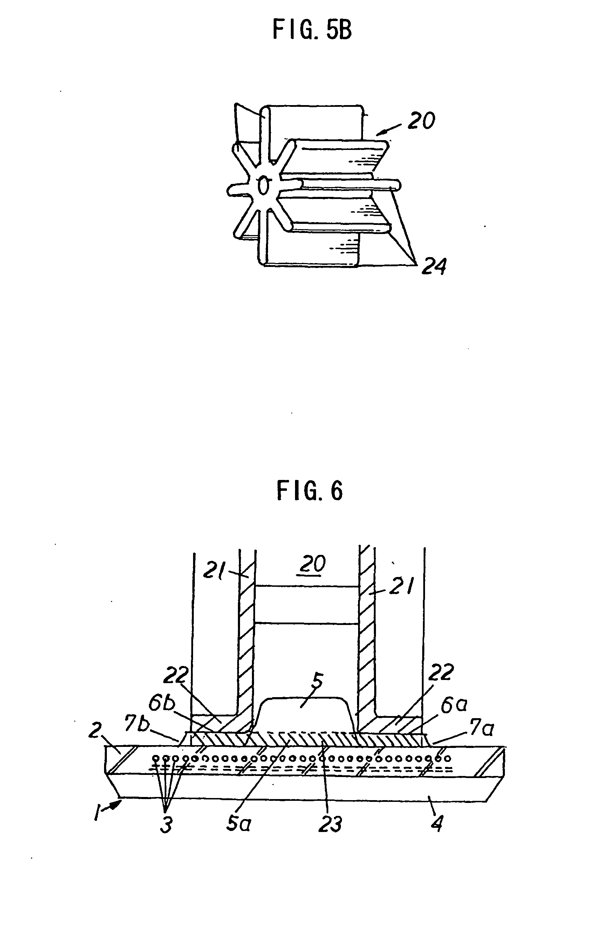

FIG. 5A and FIG. 5B are perspective views of a sprocket 20 used in the second aspect of the present invention, wherein FIG. 5A is an example of a pin-type sprocket, and FIG. 5B is an example of a gear-type sprocket. Generally, the pin-type sprocket 20 is a structure in which two discs 21 are made to face each other, flanges 22 are formed at the discs 21, and pins 23 are bridged at edge portions of the discs 21. Further, while the flanges 22 are contacted with the rubber crawler 1, the pins 23 engage with the rubber crawler 1. On the other hand, the gear-type sprocket 22 is a structure in which distal ends 24 of a gear engage with the rubber crawler. These pins 23 and distal ends 24 are characterized in that lengths of engaging portions thereof are extremely long compared with those of the conventional art. When the sprocket 20 is a pin-type sprocket, the flanges 22 and the pins 23, and the rubber crawler 1 arc contacted with each other at the time of driving, and a pressure-receiving area at which the rubber crawler 1 receives the driving force is large. Accordingly, abrasion of the rubber crawler 1 can be reduced.

When the sprocket 20 is a gear-type sprocket, the gear distal ends 24 are contacted with the rubber crawler 1 at the time of driving, while the sprocket 20 is not contacted on the raised step portions 6a and 6b, and space is formed from the rubber protrusions 5 toward the outer circumferential portion of the rubber crawler 1. Accordingly, discharging of dirt is excellent.

Hereinafter, using the pin-type sprocket 20 as an example, engagement with the rubber crawler 1 in the second aspect of the present invention will be further explained. FIG. 6 is a cross-sectional view at the grooves 7a and 7b upon using the pin-type sprocket 20 in the rubber crawler 1 of the first aspect of the present invention. The discs 21 of the sprocket 20 are disposed at the left and right with the rubber protrusions 5 therebetween, and the flanges 22 formed at the edge portions of the discs 21 roll on the raised step portions 6a and 6b. Further, the pins 23 are formed long enough to reach the base portions 5a of the rubber protrusions 5 and the grooves 7a and 7b and engage therewith to transmit driving force. It should be noted that, as shown in the drawing, the depth of the grooves 7a and 7b in the raised step portions 6a and 6b is made to be a depth that is substantially the same as the diameter of the pins 23.

Since pins of a sprocket in a conventional rubber crawler traveling device are configured to engage only with the base portions 5a of the rubber protrusions 5, large strain is always exerted at the rubber protrusions 5, and damage to these portions occurs relatively quickly. In the traveling device of the second aspect of the present invention, improvement is carried out with regard to this point, the pins 23 are made to be longer and configured to also engage with the grooves 7a and 7b formed at the raised step portions 6a and 6b, and concentration of strain is dispersed.

In other words, in a traveling device in which a conventional sprocket is used, only pins having a length that is the same as the width of the base portions 5a of the rubber protrusions 5 in the rubber crawler can be used, but in the case of the traveling device of the present invention, since the pins 23 having a length that reaches the base portions 5a of the rubber protrusions 5 and the grooves 7a and 7b formed in the raised step portions 6a and 6b in the rubber crawler can be used, it becomes possible to greatly reduce the surface pressure between the pins 23 and the engaging portions of the rubber crawler. Even in the case where a large load acts on the rubber crawler, deformation of the rubber protrusions 5 can be made extremely small, it becomes possible to suppress tooth skipping, and durability of the rubber protrusions 5 can be greatly improved.

It should be noted that, although the sprocket 20 rolls on the raised step portions 6a and 6b, the clearance of the grooves 7a and 7b between the raised step portions 6a and 6b is substantially the same as the diameter of the pins 23 in the sprocket, and since this is sufficiently small compared to the diameter of the sprocket 20, it is within a range in which there is no problem of vibration at the time of rolling:

It should be noted that, in the case where the pin-type sprocket 20 is used, the length of the grooves 7a and grooves 7b in the longitudinal direction of the rubber crawler is preferably from 1.0 times to 2.0 times the diameter of the pins 23, and more preferably 1.5 times the diameter of the pins 23.
When the length of the grooves 7a and 7b in the longitudinal direction of the rubber crawler is less than 1.0 times the diameter of the pins 23, the sprocket 20 does not smoothly enter the grooves 7a and 7b, and there is possibility that engagement slippage will occur. On the other hand, when it is greater than 2.0 times the diameter of the pins 23, looseness between the sprocket 20 and the grooves 7a and 7b becomes greater, and there is a possibility that the grooves 7a and 7b will be rubbed by the pins 23 and subjected to abrasion.

Even in a case where the gear-type sprocket 20 is used, by providing a structure in which the width of the gear distal ends 24 is made longer and the engagement width is as _ wide as the base portions 5a of the rubber protrusions and the grooves 7a and 7b, effects that are similar to those described above are achieved.

In the case where the gear-type sprocket 20 is used, the length of the grooves 7a and grooves 7b in the longitudinal direction of the rubber crawler is preferably from 1.0 times to 2.0 times the length of the gear distal ends 24 in the circumferential direction of the gear, and more preferably 1.5 times the length of the gear distal ends 24 in the circumferential direction of the gear.
When the length of the grooves 7a and 7b in the longitudinal direction of the rubber crawler is less than 1.0 times the length of the gear distal ends 24, the sprocket 20 does not smoothly enter the grooves 7a and 7b, and there is possibility that engagement slippage will occur. On the other hand, when it is greater than 2.0 times the length of the gear distal ends 24, looseness between the sprocket 20 and the grooves 7a and 7b becomes greater, and there is a possibility that the grooves 7a and 7b will be rubbed by the gear distal ends 24 and subjected to abrasion.

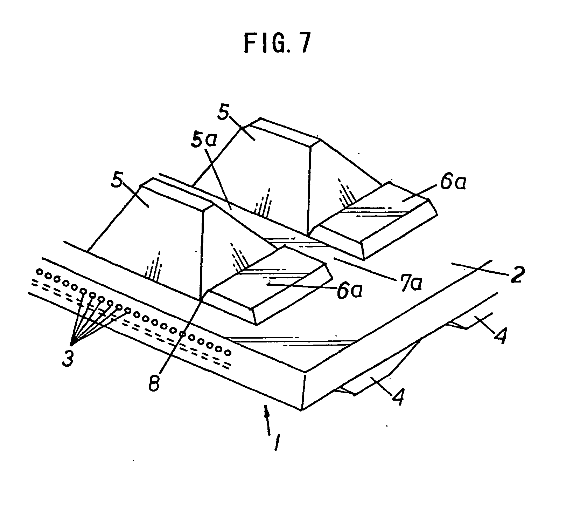

The grooves 7a and 7b configured according to the first aspect of the present invention also have the function of mud draining with respect to mud that tends to accumulate at the inner circumferential surface of the rubber crawler. FIG 7 is a modified example in which longitudinal grooves 8 are respectively configured between both of left and right sides of the rubber protrusions 5 and the raised step portions 6a and 6b to separate the rubber protrusions 5 and the raised step portions 6a and 6b. This configuration has the same operational effects as those of the first aspect and the second aspect of the present invention and also is characterized in that discharging of mud is excellent at the time of traveling on soft ground or the like.

### Industrial Applicability

The coreless rubber crawler of the present invention has the above configuration, and since driving force that is applied from the sprocket is received while being widely dispersed, concentration of strain is relatively small, damage to the rubber protrusions is extremely reduced, and the present invention can be widely utilized in engagement driving-type rubber crawlers.

### Description of the Reference Numerals

- 1: Coreless rubber crawler
- 2: Endless rubber elastic body
- 3: Steel cord
- 4: Lug
- 5: Rubber protrusion
- 5a: Base portion of rubber protrusion
- 6a, 6b: Raised step portions
- 7a, 7b: Grooves
- 8: Longitudinal groove
- 10: Wheel
- 20: Sprocket
- 21: Disc
- 22: Flange
- 23: Pin (driving portion)
- 24: Gear distal end (driving portion)

## Claims

1. A coreless rubber crawler (1) comprising:
an endless rubber elastic body (2);
a tensile material (3) buried in the endless rubber elastic body in a longitudinal direction thereof;
a rubber lug (4) formed at an outer circumferential surface of the endless rubber elastic body; and
rubber protrusions (5) formed at the centre in the width direction of an inner circumferential surface of the endless rubber elastic body at a constant pitch in the longitudinal direction thereof, **characterised in that**
raised step portions (6a, 6b) are formed to the right and left of the rubber protrusions in the width direction of the endless rubber elastic body, and a linear groove (7a, 7b) that is continuous to base portions of the rubber protrusions is formed between raised step portions that are adjacent to each other in the longitudinal direction of the endless rubber elastic body when the rubber crawler which is mounted at a machine body is seen in side view,
wherein grooves (8) are formed between the rubber protrusions and the raised step portions in a direction that is substantially the same as the longitudinal direction of the endless rubber elastic body.

2. A coreless rubber crawler traveling device comprising:
a coreless rubber crawler according to claim 1; and
a sprocket (2a) that engages with the rubber protrusions to transmit driving force,
wherein a length of an engaging portion (22, 23, 24) of the sprocket is defined to be a length that engages with the base portions of the rubber protrusions and the linear groove.

3. The coreless rubber crawler traveling device of claim 2, wherein the sprocket is a pin-type sprocket, and the engaging portion is a pin.

4. The coreless rubber crawler traveling device of claim 2, wherein the sprocket is a gear-type sprocket, and the engaging portion is a distal end portion of a gear.

5. The coreless rubber crawler traveling device of claim 3, wherein a length of the linear groove in the longitudinal direction of the endless rubber elastic body is substantially the same as a diameter of the pin.

6. The coreless rubber crawler traveling device of claim 4, wherein a length of the linear groove in the longitudinal direction of the endless rubber elastic body is substantially the same as a length of the distal end portion of the gear in a circumferential direction of the gear.

## Patentansprüche

1. Eine kernlose Gummiraupe (1) umfassend:
einen endlosen gummielastischen Körper (2);
ein dehnbares Material (3), eingebettet in dem endlosen gummielastischen Körper in einer längsgerichteten Richtung davon;
einen Gummiansatz (4), der an einer äußeren Umfangsoberfläche des endlosen gummielastischen Körpers gebildet ist; und
Gummivorsprünge (5), die im Zentrum in der Breitenrichtung einer inneren Umfangsoberfläche des endlosen gummielastischen Körpers gebildet sind, mit einem konstanten Abstand in der längsgerichteten Richtung davon,
**dadurch gekennzeichnet, dass**
erhabene Stufenabschnitte (6a, 6b) rechts und links der Gummivorsprünge in der Breitenrichtung des endlosen gummielastischen Körpers gebildet sind, und eine lineare Nut (7a, 7b), die kontinuierlich zu Basisabschnitten der Gummiabschnitte verläuft, und zwischen Stufenabschnitten gebildet ist, die benachbart zueinander in der Längsrichtung des endlosen gummielastischen Körpers sind, wenn die Gummiraupe, welche auf einem Maschinenkörper befestigt ist, in der Seitenansicht betrachtet wird,
wobei Nuten (8) zwischen den Gummivorsprüngen und den erhabenen Stufenabschnitten in einer Richtung gebildet sind, die im Wesentlichen die gleiche ist wie die Längsrichtung des endlosen gummielastischen Körpers.

2. Eine kernlose Gummiraupen-Transportvorrichtung, umfassend:
eine kernlose Gummiraupe nach Anspruch 1; und
einen Dom (2a), der in die Gummivorsprünge eingreift, um Antriebskraft zu übertragen, wobei eine Länge eines Eingriffsabschnitts (22, 23, 24) des Doms als die Länge definiert ist, die mit den Basisabschnitten der Gummivorsprünge und der linearen Nut eingreift.

3. Kernlose Gummiraupen-Transportvorrichtung nach Anspruch 2, bei welcher der Dom ein Stifttypdorn ist und der Eingriffsabschnitt ein Stift ist.

4. Kernlose Gummiraupen-Transporivorrichtung nach Anspruch 2, bei welcher der Dom ein zahnradartiger Dorn ist und der Eingriffsabschnitt ein distaler Endabschnitt eines Zahnrades ist.

5. Kernlose Gummiraupen-Transportvorrichtung nach Anspruch 3, bei welcher eine Länge der linearen Nut in der Längsrichtung des endlosen gummielastischen Körpers im Wesentlichen die gleiche ist wie ein Durchmesser des Stiftes.

6. Kernlose Gummiraupen-Transportvorrichtung nach Anspruch 4, bei welcher eine Länge der linearen Nut in der Längsrichtung des endlosen gummielastischen Körpers im Wesentlichen die gleiche ist wie eine Länge des distalen Endabschnitts des Zahnrades in einer Umfangsrichtung des Zahnrades.

## Revendications

1. Chenille en caoutchouc (1) sans noyau comprenant :
un corps élastique (2) sans fin en caoutchouc ;
un matériau résistant (3) enterré dans le corps élastique sans fin en caoutchouc dans sa direction longitudinale ;
une barrette en caoutchouc (4) formée au niveau d'une surface circonférentielle externe du corps élastique sans fin en caoutchouc ; et
des protubérances en caoutchouc (5) formées au centre dans la direction de largeur d'une surface circonférentielle interne du corps élastique sans fin en caoutchouc avec un pas constant dans sa direction longitudinale,
**caractérisée en ce que**
des parties étagées (6a, 6b) en élévation sont formées sur la droite et la gauche des protubérances en caoutchouc dans la direction de largeur du corps élastique sans fin en caoutchouc, et une rainure linéaire (7a, 7b) qui se poursuit vers des parties de base des protubérances en caoutchouc est formée entre des parties étagées en élévation qui sont adjacentes entre elles dans la direction longitudinale du corps élastique sans fin en caoutchouc lorsqu'on regarde la chenille en caoutchouc montée sur le corps d'une machine en vue de côté,
dans laquelle des rainures (8) sont formées entre les protubérances en caoutchouc et les parties étagées en élévation dans une direction qui est essentiellement la même que la direction longitudinale du corps élastique sans fin en caoutchouc.

2. Dispositif de déplacement à chenille en caoutchouc sans noyau comprenant :
une chenille en caoutchouc sans noyau selon la revendication 1 ; et
une roue de chaîne (2a) qui s'engrène avec les protubérances en caoutchouc afin de transmettre une force d'entraînement,
dans lequel une longueur d'une partie d'engrènement (22, 23, 24) de la roue de chaîne est définie comme étant une longueur qui s'engrène avec les parties de base des protubérances en caoutchouc et la rainure linéaire.

3. Dispositif de déplacement à chenille en caoutchouc sans noyau de la revendication 2, dans lequel la roue de chaîne est une roue de chaîne de type tige et la partie d'engrènement est une tige.

4. Dispositif de déplacement à chenille en caoutchouc sans noyau de la revendication 2, dans lequel la roue de chaîne est une roue de chaîne de type engrenage et la partie d'engrènement est une partie d'extrémité distale d'un engrenage.

5. Dispositif de déplacement à chenille en caoutchouc sans noyau de la revendication 3, dans lequel une longueur de la rainure linéaire dans la direction longitudinale du corps élastique sans fin en caoutchouc est essentiellement la même que le diamètre de la tige.

6. Dispositif de déplacement à chenille en caoutchouc sans noyau de la revendication 4, dans lequel une longueur de la rainure linéaire dans la direction longitudinale du corps élastique sans fin en caoutchouc est essentiellement la même qu'une longueur de la partie d'extrémité distale de l'engrenage dans la direction circonférentielle de l'engrenage.
